# EUROPEAN PATENT SPECIFICATION

(11) **EP 4 110 877 B1**
(45) Date of publication and mention of the grant of the patent: **27.03.2024**
(21) Application number: 21707698.3
(22) Date of filing: 26.02.2021
(51) Int. Cl.: C09D 11/18, C09D 11/16

(54) **WRITING GEL INK**
SCHREIBGELTINTE
ENCRE GEL D'ÉCRITURE

(30) Priority: 28.02.2020 EP 20315027; 24.07.2020 EP 20315360
(43) Date of publication of application: 04.01.2023
(73) Proprietor: Société BIC, 92110 Clichy (FR)
(72) Inventor: CAFFIER, Guillaume, 68290 Wegscheid (FR); LIU, Wing Yam, 77144 Montevrain (FR)
(74) Representative: Peterreins Schley
(86) International application number: PCT/EP2021/054877
(87) International publication number: WO 2021/170822

(56) References cited:
- EP-A1- 1 101 804
- EP-A1- 1 101 805
- EP-A1- 3 502 197
- WO-A1-2010/052729
- JP-A- 2015 155 518
- JP-A- 2016 017 105
- JP-A- 2016 117 828
- JP-A- 2019 189 751

## Description

### Field of the Present Disclosure

The present disclosure concerns the field of writing instruments, in particular pens such as ball-pens, and writing ink for use in such writing instruments.

### Background of the Present Disclosure

Conventionally, ball pen inks are Newtonian high viscosity solvent based inks. Due to the use of glycols solvents of low volatility, ball pen inks are very stable during storage since the ink does not dry. Therefore, such inks can be used in pens without point protection. While such glycols solvent-based systems are desirable, they are typically also endowed with high shear viscosity. Again, high shear viscosity is per se not an undesirable property since it helps avoiding static leakage. Static leakage corresponds to the ink drop formation on the point when the pen is stored pointing downwards, especially in hot and humid condition. In a Newtonian system, the high shear viscosity also correlates with a viscosity at rest, and, thus, helps in reducing the problem of settling out of pigments and other solids which may clog the pen point. However, with high shear viscosities, the writing experience is not as smooth as the consumer would want. It turned out that balancing these properties was exceedingly difficult.

In order to solve these problems, the formulator turned to gel inks. Gel inks have a pseudoplastic rheological profile. In general gel inks are water based. They are a good compromise between low static leakage, smoothness and particles stabilization. However, they still suffer from several drawbacks:
Water is a light and volatile solvent. When stored without point protection (cap or hotmelt), the ink in the point can dry and clog the point. Moreover, the cap-off time of gel-ink based pens was found to be much lower as cap-off time of glycol-based ball pens.

Despite the use of corrosion inhibitors, water-based inks remain corrosive fluids. It is therefore impossible to use brass points and it is mandatory to use stainless steel points which are quite expensive materials and difficult to manufacture due to material hardness.

Furthermore, with water being a bad lubricant, it is also mandatory to use points with strong flow. For typical pens, it was found that the flow of a ball pen with a water-based ink could not be lowered to less than about 300 mg/200 m. This compares unfavorably to a glycol-based ink with about 35 mg/200 m. As a result, the mileage (i.e. total length of writing of the pen) of water-based ink pens is much lower than the mileage of glycol-based inks pens. Glycol-based inks, or more generally solvent-based inks, for ball pens have also been described in the prior art. In particular, JP3078172 and JPH07-196972 describe the use of fatty acid amide wax in an oily ink composition as a thixotropic agent. However, use of fatty amid waxes alone is not sufficient to avoid the static leakage of the ink. In WO 2019/122017 A1, this technical problem is addressed by using a combination of fatty acid amide wax and silica particles are used as the gelling agent.

However, there is still room for further improvement of solvent-based inks for ink pens, in particular when it comes to balancing the rheological properties of the ink to achieve both excellent writing performance and avoiding leakage of the ink from the pen both after dynamic situations (e.g. after writing or after shock events such as dropping the pen) and in static situations (e.g. storing the pen on a shelf or storing the pen under heat and humidity such as encountered when keeping the pen close to the human body in a pocket). In particular, the problem of gooping, i.e. undesirable leakage from the pen tip immediately after writing, remains an issue.

### Description of the Figure

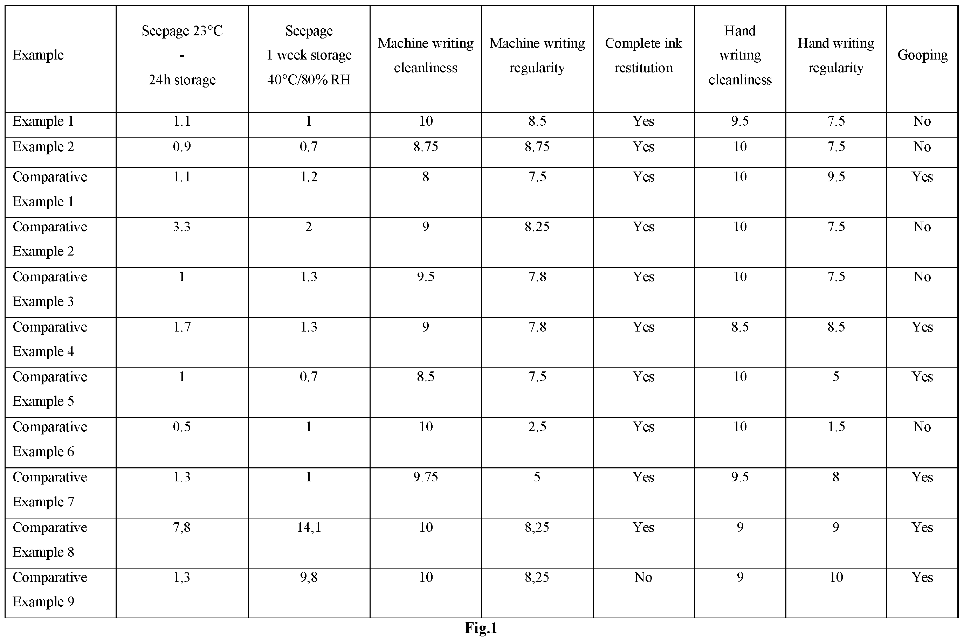

Fig. 1 summarizes the performance of Examples 1 and 2 and Comparative Examples 1 to 9

### Detailed Description of the Present Disclosure

Hereinafter, a detailed description will be given of the present disclosure. The terms or words used in the description and the claims of the present disclosure are not to be construed limitedly as only having common-language or dictionary meanings and should, unless specifically defined otherwise in the following description, be interpreted as having their ordinary technical meaning as established in the relevant technical field. The detailed description will refer to specific embodiments to better illustrate the present disclosure, however, it should be understood that the presented disclosure is not limited to these specific embodiments.

In a first aspect, the present disclosure relates to a writing instrument. The writing instrument may be a pen, in particular a ball-pen. The writing instrument may contain a non-aqueous writing ink. In this context, non-aqueous means that the ink does not comprise water as a solvent for dyes/pigments and/or may be substantially free (e.g. containing less than about 2 wt.-% with respect to the total weight of the ink) or free of water.

The non-aqueous writing ink may comprise a solvent, a coloring agent, a resin, a gelling agent, and a homo or copolymer of vinylpyrrolidone and/or a polyvinyl alcohol which is acetalized with an aldehyde comprising between 1 and about 6 carbon atoms. The gelling agent may comprise a mixture of silica particles and of a fatty acid amide wax. It should be understood that the presence of further gelling agents is not excluded and that one or more further gelling agents can be optionally added to the ink.

The homo or copolymer of vinylpyrrolidone may be present in amounts of between about 0.05 and about 0.6 wt.-%, more specifically between about 0.08 and about 0.5 wt.-%, even more specifically between about 0.1 wt.-% and about 0.4 wt.-%, and in particular between about 0.10 wt.-% and about 0.35 wt.-%, relative to the total weight of the ink. It was surprisingly found that the addition of a select amount of a homo or copolymer of vinylpyrrolidone, in particular the addition of a polyvinylpyrrolidone having a weight-average molecular weight of above about 200 kDa, specifically between about 400 and about 2300 kDa, more specifically between about 450 and about 2000 kDa, and in particular between about 600 and about 1900 kDa, to the aforementioned non-aqueous writing ink provides an exceptionally balanced writing and storage performance. The effect will be further elaborated in the below example section. Without wishing to be bound by theory, it is assumed that the fatty acid amide wax creates a gelling network with the solvent which is mediated by hydrogen bonds. Again without wishing to be bound by theory, the ability of homo or copolymers of vinylpyrrolidone to accept hydrogen bonds from that gelling network while not contributing hydrogen bonds to the network itself is believed to introduce an "elasticity" to the ink that does not depend on the shear. This effect is believed to provide the aforementioned exceptionally balanced writing and storage performance. Of note, the effect was found to be dependent on the concentration of the homo or copolymer of vinylpyrrolidone with amounts of above 0.6 wt.-%, relative to the total weight of the ink, being detrimental to the writing performance.

In some embodiments, the homo or copolymer of vinylpyrrolidone may have a weight-average molecular weight of above about 200 kDa, specifically between about 400 and about 2300 kDa, more specifically between about 450 and about 2000 kDa, and in particular between about 600 and about 1900 kDa.

In some embodiments, the homo or copolymer of vinylpyrrolidone may be polyvinylpyrrolidone. It may be advantageous that the polyvinylpyrrolidone has a weight-average molecular weight of above about 200 kDa, specifically between about 400 and about 2300 kDa, more specifically between about 450 and about 2000 kDa, and in particular between about 600 and about 1900 kDa.

The polyvinyl alcohol which is acetalized with an aldehyde comprising between 1 and about 6 carbon atoms may be present in amounts of between about 0.05 and about 1.0 wt.-%, more specifically between about 0.08 and about 0.8 wt.-%, even more specifically between about 0.1 wt.-% and about 0.6 wt.-%, and in particular between about 0.10 wt.-% and about 0.45 wt.-%, relative to the total weight of the ink. It was surprisingly found that the addition of a select polyvinyl alcohol which is acetalized with an aldehyde comprising between 1 and about 6 carbon atoms, in particular the addition of a polyvinylbutyral having a weight-average molecular weight of above about 200 kDa, specifically between about 400 and about 2300 kDa, more specifically between about 450 and about 2000 kDa, and in particular between about 600 and about 1900 kDa, to the aforementioned non-aqueous writing ink provides an exceptionally balanced writing and storage performance. Without wishing to be bound by theory, it is again assumed that the fatty acid amide wax creates a gelling network with the solvent which is mediated by hydrogen bonds. Again without wishing to be bound by theory, the ability of polyvinyl alcohols which are acetalized with an aldehyde comprising between 1 and about 6 carbon atoms to accept hydrogen bonds from that gelling network while having a reduced ability (due to acetalization of hydroxyl groups) to contribute hydrogen bonds to the network itself is believed to introduce an "elasticity" to the ink that does not depend on the shear. This effect is believed to provide the aforementioned exceptionally balanced writing and storage performance.

In some embodiments, the polyvinyl alcohol which is acetalized with an aldehyde comprising between 1 and about 6 carbon atoms may have a weight-average molecular weight of above about 200 kDa, specifically between about 400 and about 2300 kDa, more specifically between about 450 and about 2000 kDa, and in particular between about 600 and about 1900 kDa.

In some embodiments, the polyvinyl alcohol which is acetalized with an aldehyde comprising between 1 and about 6 carbon atoms may be polyvinylbutyral. It may be advantageous that the polyvinylbutyral has a weight-average molecular weight of above about 200 kDa, specifically between about 400 and about 2300 kDa, more specifically between about 450 and about 2000 kDa, and in particular between about 600 and about 1900 kDa.

In some embodiments, it may be advantageous that the polyvinyl alcohol which is acetalized with an aldehyde comprising between 1 and about 6 carbon atoms, in particular polyvinylbutyral, is used in combination with a homo or copolymer of vinylpyrrolidone, in particular a polyvinylpyrrolidone. In such an embodiment these two polymers may be jointly present in amounts of between about 0.05 and about 1.0 wt.-%, more specifically between about 0.08 and about 0.8 wt.-%, even more specifically between about 0.1 wt.-% and about 0.6 wt.-%, and in particular between about 0.10 wt.-% and about 0.45 wt.-%, relative to the total weight of the ink. It may be advantages in such embodiments that the homo or copolymer of vinylpyrrolidone, in particular the polyvinylpyrrolidone, has a has a weight-average molecular weight of above about 200 kDa, specifically between about 400 and about 2300 kDa, more specifically between about 450 and about 2000 kDa, and in particular between about 600 and about 1900 kDa.As indicated, the gelling agent may comprise a mixture of silica particles and of a fatty acid amide wax. The term "mixture" is not particularly limited and is intended to refer to any combination comprising silica particles and a fatty acid amide wax. In some embodiments, it may be advantageous to premix the silica particles and of a fatty acid amide wax. Suitable processes for doing this will be elaborated further below.

In some embodiments, the silica particles may comprise silica particles. It may be advantageous that the silica particles are hydrophilic silica particles. It may be advantageous that the silica particles are fumed silica particles, in particular hydrophilic fumed silica particles, such as the product sold by Evonik under the trade name AEROSIL^{®} 200.

In some embodiments, the non-aqueous writing ink may comprise dispersed silica particles or silica-based gel-like particles wherein the average particle size is less than about 1 µm, more specifically less than about 0.9 µm, in particular less than about 0.8 µm using dynamic light scattering (DLS) such as Malvern Zetasizer ZS.

The use of fatty acid amide waxes is well-established in the art as *i.a.* rheology-modifying agents. Suitable fatty acid residues may include aliphatic carboxylic acids having more than about 6 carbon atoms, in particular about 6 to about 24 carbon atoms, or about 6 to about 18 carbon atoms. Said aliphatic carboxylic acids may optionally be substituted, in particular with hydroxyl groups. Examples of suitable fatty acid residues include residues derived from caprylic acid, capric acid, lauric acid, myristic acid, palmitic acid, stearic acid, hydroxystearic acid, arachidic acid, and behenic acid.

In some embodiments, the fatty acid amide wax is a fatty acid diamide wax. The fatty acid diamide wax may comprise a fatty acid diamide comprising two fatty acid residues of about 6 or more carbon atoms, in particular of about 6 to about 24 carbon atoms, or about 6 to about 18 carbon atoms, which may optionally be substituted, in particular with hydroxyl groups. It may be advantageous that the fatty acid diamide wax comprises an N,N'-alkylene moiety having between 1 and about 12 carbon atoms, in particular between 1 and about 6 carbon atoms, in particular between about 2 to about 4 carbon atoms. It may be particularly advantageous that the fatty acid diamide wax comprises an N,N'-ethylene-bis-fatty acid amide, in particular wherein the two fatty acid residues independently of each other comprise about 6 or more carbon atoms, in particular about 6 to about 24 carbon atoms, or about 6 to about 18 carbon atoms. Each of the fatty acid residues may further and independently from each other be substituted, in particular with hydroxyl groups.

In some embodiments, it may be advantageous that the fatty acid amide wax may comprise 12-hydroxy-N-[2-[(1-oxooctyl)amino]ethyl]octadecanamide; N,N'-1,2-ethylene bis(12-hydroxy-octadecanamide); N,N'-1,2-ethylene bis(12-hydroxyoctadecanamide); N,N'-ethylene bis(12-hydroxystearamide); N,N'-ethylene bis(caprylamide), or mixtures thereof.

In some embodiments, it may be advantageous that the fatty acid amide wax may comprise an octadecanamide of the following formula (I)

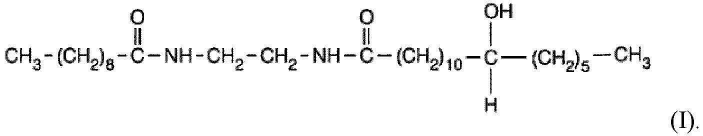

In some embodiments, the gelling agent may be present in amounts of between about 0.1 and about 1.2 wt.-%, more specifically between about 0.15 and about 0.60 wt.-%, relative to the total weight of the ink.

In some embodiments, the hydrophilic silica particles may be present in an amount of between about 0.10 and about 0.60 wt.-%, relative to the total weight of the ink.

In some embodiments, the fatty acid amide wax may be present in an amount of between about 0.10 and about 0.60 wt.-%, relative to the total weight of the ink.

In some embodiments, the amount by weight of the homo or copolymer of vinylpyrrolidone, in particular polyvinylpyrrolidone, may be lower than the amount by weight of the mixture of silica particles and of fatty acid amide wax.

In some embodiments, the amount by weight of the polyvinyl alcohol which is acetalized with an aldehyde comprising between 1 and about 6 carbon atoms, in particular polyvinylbutyral, may be lower than the amount by weight of the mixture of silica particles and of fatty acid amide wax.

The non-aqueous writing ink may comprise a solvent. The term "solvent" is not intended to be particularly limiting and also includes *i.a.* a medium which disperses or suspends solid components such as pigments. In some embodiments, the solvent may be selected from the group consisting of glycol ethers, alcohols, and mixture thereof. It may be advantageous that the solvent is selected from polyethylene glycol ethers, polypropylene glycol ethers, phenoxyethanol, 1-phenoxy-2-propanol, or mixtures thereof. In some embodiments, the alcohol is a alcohol having a high boiling point such as boiling point of above about 130°C, above about 150°C, or above about 200°C. In some embodiments, the alcohol may be selected form the group consisting of benzyl alcohol, ethylene glycol, diethylene glycol, propylene glycol, dipropylene glycol, trimethylene glycol, glycerin, and mixtures thereof. It may be particularly advantageous that the alcohol is benzyl alcohol. In another embodiment the solvent may be a glycol ether having a high boiling point such as boiling point of above about 130°C, above about 150°C, or above about 200°C. It may be advantageous that the glycol ether is selected from the group consisting of diethylene glycol monoethyl ether, diethylene glycol mono butyl ether, dipropylene glycol monobutyl ether, tripropylene glycol monomethyl ether, phenoxyethanol, phenoxypropanol, and mixtures thereof. It may be particularly advantageous that the glycol ether is selected from the group consisting of phenoxyethanol, 1-phenoxy-2-propanol and mixture thereof.

In some embodiments, the solvent may be present in amounts of between about 35 and about 80 wt.-%, relative to the total weight of the ink. In some embodiments, it may be advantageous that the solvent is present in amounts between about 45 and about 75 wt.-%, relative to the total weight of the ink.

In some embodiments, it may be advantageous that the ink comprises between about 55 and about 75 wt.-% of 1-phenoxy-2-propanol.

In some embodiments, the coloring agent may be a dye, a pigment, or mixtures thereof, in particular a dye or pigment selected from the group consisting of azoic dyes, triarylmethane dyes, phthalocyanine derivative dyes, xanthene dyes and mixture thereof. In some embodiments, the colorant may be a pigment.

Examples of a dye usable in the ink according to the present disclosure include the following: VARIFAST Black 3806 (C.I. Solvent Black 29), 3807 (trimethyl benzyl ammonium salt of C.I. Solvent Black 29), Spirit Black SB (C.I. Solvent Black 5), SPIRON Black GMH (C.I. Solvent Black 43), Solvent Black 46 (salt forming from of C.I. Basic Violet 3 and Acid Yellow 36), VARIFAST Red 1308 (salt forming form of C.I. Basic Red 1 dye and C.I. Acid Yellow 23 dye), Solvent Red 49, VARIFAST Yellow AUM (salt forming form of C.I. Basic Yellow 2 dye and C.I. Acid Yellow 42 dye), SPIRON Yellow C2 GH (organic acid salt of C.I. Basic Yellow 2), SPIRON Violet CRH (C.I. Solvent Violet 8-1), VARIFAST Violet 1701 (salt forming form of C.I. Basic Violet 1 and C.I. Acid Yellow 42 dye), SPIRON Red CGH (organic acid salt of C.I. Basic Red 1), SPIRON Pink BH (C.I. Solvent Red 82), Nigrosine Base EX (C.I. Solvent Black 7), Oil Blue 613 (C.I. Solvent Blue 5), and Neozapon Blue 808 (C.I. Solvent Blue 70).

In some embodiments, the coloring agent may be a dye and may be selected from also a salt-forming dye and mixtures thereof, such as: Solvent Black 46 (salt forming from of C.I. Basic Violet 3 and Acid Yellow 36), VARIFAST Red 1308 (salt forming form of C.I. Basic Red 1 dye and C.I. Acid Yellow 23 dye), VARIFAST Yellow AUM (salt forming form of C.I. Basic Yellow 2 dye and C.I. Acid Yellow 42 dye), VARIFAST Violet 1701 (salt forming form of C.I. Basic Violet 1 and C.I. Acid Yellow 42 dye).

Examples of a pigments usable in the ink according to the present disclosure include organic, inorganic and processed pigments. Thus, the pigment may for example be an inorganic pigment such as a carbon black, ultramarine and titanium dioxide pigment, an organic pigment such as an azo-based pigment, phthalocyanine-based pigment, indigo pigment, thioindigo pigment, thren-based pigment, quinacridone-based pigment, anthraquinone-based pigment, thron-based pigment, diketopyrrolopyrrole-based pigment, dioxazine-based pigment, perylene-based pigment, perinone-based pigment and isoindolinone-based pigment, a metal pigment such as an aluminum powder or aluminum powder whose surface is treated with a colored resin, a metal gloss pigment obtained by forming a metal vapor deposition film such as that of aluminum on a transparent or colored transparent film, a metal pigment having a thickness of about 0.01 to about 0.1 µm obtained by peeling a metal vapor deposition film such as that of aluminum formed on a substrate such as a film, a colloidal particle having a mean particle size of about 5 to about 30 nm selected from gold, silver, platinum and copper, a fluorescent pigment, light-storing pigment, pearl pigment obtained by coating the surface of a core which is a naturally occurring mica, synthetic mica, glass flake, alumina and transparent film with a metal oxide such as titanium oxide, and the like.

In some embodiments, the coloring agent may be present in amounts of between about 5 and about 30 wt.-%, in particular between about 7 and about 28 wt.-%, relative to the total weight of the ink.

In some embodiments, the non-aqueous writing ink may further comprise one or more additives. In some embodiments, the additive may be a further gelling agent. In some embodiments, it may be advantageous that the non-aqueous writing ink further comprises one or more additives. In some embodiments, the additives may be selected from the group consisting of thickening agents, clear drain agents, viscosity imparting agents, lubricants, dispersing agents and mixtures thereof.

In some embodiments, the non-aqueous writing ink may comprise in amounts relative to the total weight of the ink: between about 0.1 and about 0.6 wt.-% polyvinylpyrrolidone having a weight-average molecular weight of between about 450 and about 2000 kDa; between about 0.15 and about 0.60 wt.-% of the fatty acid amide wax; and between about 0.15 and about 0.60 wt.-% hydrophilic silica.

In some embodiments, the non-aqueous writing ink may comprise in amounts relative to the total weight of the ink: between about 0.1 and about 1.0 wt.-% polyvinylbutyral having a weight-average molecular weight of between about 450 and about 2000 kDa; between about 0.15 and about 0.60 wt.-% of the fatty acid amide wax; and between about 0.15 and about 0.60 wt.-% hydrophilic silica.

In some embodiments, the non-aqueous writing ink may comprise in amounts relative to the total weight of the ink: between about 0.1 and about 0.6 wt.-% polyvinylpyrrolidone having a weight-average molecular weight of between about 450 and about 2000 kDa and a polyvinylbutyral having a weight-average molecular weight of between about 450 and about 2000 kD; between about 0.15 and about 0.60 wt.-% of the fatty acid amide wax; and between about 0.15 and about 0.60 wt.-% hydrophilic silica.

The non-aqueous writing ink may comprise a resin. The resin may impart viscosity to the ink and/or may act as a binder. It may be a natural or synthetic resin. The resin may comprise a polyester resin; a polyurethane resin; a ketone resin such as a ketone-formaldehyde resin such as an acetophenone-formaldehyde modified resin; an ether resin; a vinyl resin, such as a vinyl chloride copolymer, polyvinyl butyral, a polyvinyl acetate, vinyl acetate copolymer, or a polyvinyl alcohol resin; an acrylic resin; a styrene-acrylic resin; a styrene-maleic acid copolymer resin; a rosin-maleic acid copolymer resin; a phenol resin; a cellulosic resin; an amid resin, an alkyd resin, a rosin-modified resin, a rosin-modified phenol resin; a xylene resin; a polyacetal resin; a terpene resin; a phenoxy resin; or a mixture thereof. In some embodiments, it may be advantageous that the resin selected from polyester resins, polyurethane resins, ketone resins, ether resins, and mixtures thereof. It may be particularly advantageous that the resin is a ketone resin.

In some embodiments, the resin may be present in an amount of between about 3 and about 30%, specifically between about 3 and about 25%, and in particular between about 5 to about 20%, relative to the total weight of the ink.

In some embodiments, the non-aqueous writing ink may comprise or consist of the following components in amounts relative to the total weight of the ink: about 55 to about 75 wt.-% of the solvent is selected from a polyethylene glycol ether, a polypropylene glycol ether, phenoxyethanol, 1-phenoxy-2-propanol, or mixtures thereof; about 10 to about 30 wt.-% of the coloring agent; about 0.10 to about 0.60 wt.-% polyvinylpyrrolidone having a weight-average molecular weight of between about 600 and about 1900 kDa; about 0.15 to about 0.60 wt.-% fatty acid amide wax; about 0.15 to about 0.60 wt.-% hydrophilic silica; and the remainder of components being selected from the resins and additives.

In some embodiments, the non-aqueous writing ink may comprise or consist of the following components in amounts relative to the total weight of the ink: about 55 to about 75 wt.-% of the solvent is selected from a polyethylene glycol ether, a polypropylene glycol ether, phenoxyethanol, 1-phenoxy-2-propanol, or mixtures thereof; about 10 to about 30 wt.-% of the coloring agent; about 0.10 to about 0.60 wt.-% polyvinylbutyral having a weight-average molecular weight of between about 600 and about 1900 kDa; about 0.15 to about 0.60 wt.-% fatty acid amide wax; about 0.15 to about 0.60 wt.-% hydrophilic silica; and the remainder of components being selected from the resins and additives.

In some embodiments, the non-aqueous writing ink may comprise or consist of the following components in amounts relative to the total weight of the ink: about 55 to about 75 wt.-% of the solvent is selected from a polyethylene glycol ether, a polypropylene glycol ether, phenoxyethanol, 1-phenoxy-2-propanol, or mixtures thereof; about 10 to about 30 wt.-% of the coloring agent; about 0.10 to about 0.60 wt.-% of a polyvinylpyrrolidone having a weight-average molecular weight of between about 600 and about 1900 kDa and a polyvinylbutyral having a weight-average molecular weight of between about 600 and about 1900 kDa; about 0.15 to about 0.60 wt.-% fatty acid amide wax; about 0.15 to about 0.60 wt.-% hydrophilic silica; and the remainder of components being selected from the resins and additives.

In some embodiments, the non-aqueous writing ink may comprise or may comprise or consist of the following components in amounts relative to the total weight of the ink: about 55 to about 75 wt.-% of the 1-phenoxy-2-propanol; about 10 to about 30 wt.-% of the coloring agent; about 0.10 to about 0.60 wt.-% polyvinylpyrrolidone having a weight-average molecular weight of between about 600 and about 1900 kDa; about 0.15 to about 0.60 wt.-% fatty acid amide wax comprising a N,N'-ethylene-bis-fatty acid amide, in particular a N,N'-ethylene-bis-fatty acid amide having the following formula (I) 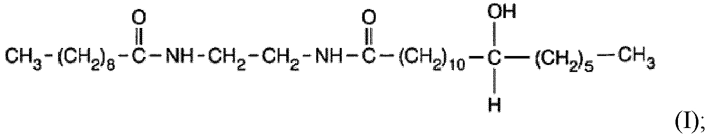 about 0.15 to about 0.60 wt.-% hydrophilic silica; about 5 to about 15 wt.-% of resin; and the remainder of components being additives, in particular the additives defined above.

In some embodiments, the non-aqueous writing ink may have a viscosity at rest at about 20 °C of between about 30 000 cps and about 150 000 cps, more specifically between about 40 000 cps and about 120 000 cps, and in particular between about 50 000 cps and about 100 000 cps. The viscosity at rest may be measured at about 20°C with a cone-and-plate rheometer such as a rheometer by Malvern Kinexus with a cone of about 40 mm and an angle of about 4° with a shear rate of 0.01 s⁻¹.

In some embodiments, the non-aqueous writing ink may have a viscosity under shear at about 100 s⁻¹ at about 20 °C of between about between about 1200 cps and about 10 000 cps, more specifically between about 1300 cps and about 5 000 cps, and in particular between about 1500 cps and about 4000 cps. The viscosity under shear may be measured at about 20°C with a cone-and-plate rheometer such as a rheometer by Malvern Kinexus with a cone of about 40 mm and an angle of about 4° with a shear rate of 100 s⁻¹.

In some embodiments, the non-aqueous writing ink may have a loss factor tan δ at rest of between about 3 and about 15, more specifically between about 4 and about 12, and in particular between about 5 and about 10. The loss factor tan δ at rest may be measured at about 20°C with a cone-and-plate rheometer such as a rheometer by Malvern Kinexus with a cone of about 40 mm and an angle of about 4° with an oscillation measurement (frequency = about 1 Hz, shear about 20 Pa).

In some embodiments, the non-aqueous writing ink may have a loss factor tan after shear of between about 8 and about 60, more specifically between about 11 and about 50, and in particular between about 15 and about 40. The loss factor tan δ after shear may be measured at about 20°C with a cone-and-plate rheometer such as a rheometer by Malvern Kinexus with a cone of about 40 mm and an angle of about 4° with an oscillation measurement (frequency = about 1 Hz, shear about 20 Pa) after pre-shearing the sample (to simulate the writing process) for about 30 seconds at about 1000 s⁻¹.

In a second aspect, the present disclosure relates to a non-aqueous writing ink comprising a solvent, a coloring agent, a resin, a gelling agent, and a homo or copolymer of vinylpyrrolidone, wherein the gelling agent is a mixture of silica particles and of a fatty acid amide wax, and wherein the homo or copolymer of vinylpyrrolidone is present in amounts of between about 0.05 and about 0.6 wt.-%, relative to the total weight of the ink.

The embodiments recited for the above first aspect of the disclosure are equally combinable with the aforementioned second aspect of the disclosure. In particular, it may be advantageous that the non-aqueous writing ink may comprise or consist of the following components in amounts relative to the total weight of the ink: about 55 to about 75 wt.-% of the solvent is selected from a polyethylene glycol ether, a polypropylene glycol ether, phenoxyethanol, 1-phenoxy-2-propanol, or mixtures thereof; about 10 to about 30 wt.-% of the coloring agent; about 0.10 to about 0.60 wt.-% polyvinylpyrrolidone having a weight-average molecular weight of between about 600 and about 1900 kDa; about 0.15 to about 0.60 wt.-% fatty acid amide wax; about 0.15 to about 0.60 wt.-% hydrophilic silica; and the remainder of components being selected from the resins and additives. More specifically, it may be advantageous that the non-aqueous writing ink may comprise or consist of the following components in amounts relative to the total weight of the ink: about 55 to about 75 wt.-% of the 1-phenoxy-2-propanol; about 10 to about 30 wt.-% of the coloring agent; about 0.10 to about 0.60 wt.-% polyvinylpyrrolidone having a weight-average molecular weight of between about 600 and about 1900 kDa; about 0.15 to about 0.60 wt.-% fatty acid amide wax comprising a N,N'-ethylene-bis-fatty acid amide, in particular a N,N'-ethylene-bis-fatty acid amide having the following formula (I) 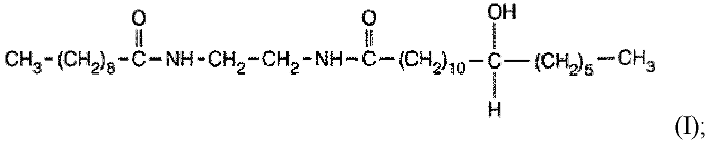 about 0.15 to about 0.60 wt.-% hydrophilic silica; about 5 to about 15 wt.-% of resin; and the remainder of components being additives, in particular the additives defined above.

In particular, it may also be advantageous that the non-aqueous writing ink may comprise or consist of the following components in amounts relative to the total weight of the ink: about 55 to about 75 wt.-% of the solvent is selected from a polyethylene glycol ether, a polypropylene glycol ether, phenoxyethanol, 1-phenoxy-2-propanol, or mixtures thereof; about 10 to about 30 wt.-% of the coloring agent; about 0.10 to about 1.0 wt.-% polyvinylbutyral having a weight-average molecular weight of between about 600 and about 1900 kDa; about 0.15 to about 0.60 wt.-% fatty acid amide wax; about 0.15 to about 0.60 wt.-% hydrophilic silica; and the remainder of components being selected from the resins and additives. More specifically, it may be advantageous that the non-aqueous writing ink may comprise or consist of the following components in amounts relative to the total weight of the ink: about 55 to about 75 wt.-% of the 1-phenoxy-2-propanol; about 10 to about 30 wt.-% of the coloring agent; about 0.10 to about 1.0 wt.-% polyvinylbutyral having a weight-average molecular weight of between about 600 and about 1900 kDa; about 0.15 to about 0.60 wt.-% fatty acid amide wax comprising a N,N'-ethylene-bis-fatty acid amide, in particular a N,N'-ethylene-bis-fatty acid amide having the following formula (I) 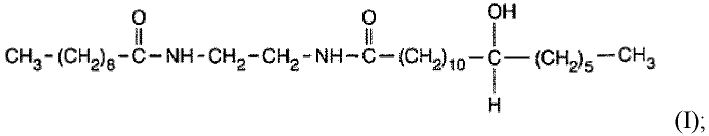 about 0.15 to about 0.60 wt.-% hydrophilic silica; about 5 to about 15 wt.-% of resin; and the remainder of components being additives, in particular the additives defined above.

In particular, it may also be advantageous that the non-aqueous writing ink may comprise or consist of the following components in amounts relative to the total weight of the ink: about 55 to about 75 wt.-% of the solvent is selected from a polyethylene glycol ether, a polypropylene glycol ether, phenoxyethanol, 1-phenoxy-2-propanol, or mixtures thereof; about 10 to about 30 wt.-% of the coloring agent; about 0.10 to about 0.60 wt.-% polyvinylpyrrolidone having a weight-average molecular weight of between about 600 and about 1900 kDa and a polyvinylbutyral having a weight-average molecular weight of between about 600 and about 1900 kDa; about 0.15 to about 0.60 wt.-% fatty acid amide wax; about 0.15 to about 0.60 wt.-% hydrophilic silica; and the remainder of components being selected from the resins and additives. More specifically, it may be advantageous that the non-aqueous writing ink may comprise or consist of the following components in amounts relative to the total weight of the ink: about 55 to about 75 wt.-% of the 1-phenoxy-2-propanol; about 10 to about 30 wt.-% of the coloring agent; about 0.10 to about 0.60 wt.-% polyvinylpyrrolidone having a weight-average molecular weight of between about 600 and about 1900 kDa; about 0.15 to about 0.60 wt.-% fatty acid amide wax comprising a N,N'-ethylene-bis-fatty acid amide, in particular a N,N'-ethylene-bis-fatty acid amide having the following formula (I) 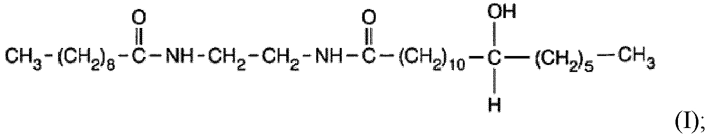 about 0.15 to about 0.60 wt.-% hydrophilic silica; about 5 to about 15 wt.-% of resin; and the remainder of components being additives, in particular the additives defined above.

In a third aspect, the present disclosure relates a process of preparing the writing instrument according to the first aspect of the present disclosure or a non-aqueous writing ink according to second aspect of the present disclosure. The process is not particularly limited.

Accordingly, in some embodiments, the non-aqueous writing ink may be prepared by the following steps: In one step, a first premix comprising silica particles in a solvent is formed. The temperature in this step may be between about 30 and about 70°C. The first premix may be mixed with a shear rate of between about 20 and about 25 m/s. In another step, a second premix comprising fatty acid amide wax in a solvent is formed. The temperature in this step may be between about 30 and about 70°C. It should be understood that the steps of forming the first premix can be performed with only a part of the solvent contained in the final writing ink. Then, the first premix may be combined with the remainder of the components of the writing ink.

However, in some embodiments, it may be advantageous that the fatty acid amide wax is activated by formation of a premix in a solvent (second premix), advantageously the solvent as described above for the ink, in particular a glycol ether, before its addition in the writing ink containing the (remainder of the) solvent and the coloring agent, the silica particles and optionally additives. Without wishing to be bound by theory, it is believed that such activation may allow the spreading of the fatty acid amide wax and therefore the obtaining of a stronger gel network. Advantageously the activation step (formation of a premix) may be carried out at a precise temperature and shear stress.

Accordingly, in some embodiments, the non-aqueous writing ink may be prepared by the following steps: In one step, a first premix comprising silica particles in a solvent is formed. The temperature in this step may be between about 30 and about 70°C. The first premix may be mixed with a shear rate of between about 20 and about 25 m/s. In another step, a second premix comprising fatty acid amide wax in a solvent is formed. The temperature in this step may be between about 30 and about 70°C. The second premix may be mixed with a shear rate of between about 20 and about 25 m/s. It should be understood that the steps of forming the first and second premixes can be performed with only a part of the solvent contained in the final writing ink. Then, the first and second premixes may be combined with the remainder of the components of the writing ink.

In order to obtain a premix, a rotor-stator disperser can be used. The activation of the fatty acid amide wax may be observed by measuring viscosity at rest of the premix. When activation is complete, viscosity at rest is maximal (spreading the fatty acid amide wax increases the viscosity at rest).

The embodiments recited for the above first aspect of the disclosure are equally combinable with the aforementioned third aspect of the disclosure.

In the following the present disclosure will be further elaborated by way of Examples.

### Examples

### Measuring Methods

Measurements on inks and pens were carried out as follows:

### 1. Measurement of rest viscosity

The viscosity of the ink has been measured at 20°C with a cone-and-plate rheometer Malvern Kinexus with a cone of 40 mm and an angle of 4° with a shear rate of 0.01 s⁻¹.

### 2. Measurement of shear viscosity

The viscosity of the ink has been measured at 20°C with a cone-and-plate rheometer Malvern Kinexus with a cone of 40 mm and an angle of 4° with with a shear rate of 100 s⁻¹.

### 3. Determination of shear thinning index

Mathematical formula : Shear thinning index = (Measurement of rest viscosity 0.01s⁻¹ at 20° CP 4°/40 mm) / (Measurement of rest viscosity 100 s⁻¹ at 20° CP 4°/40 mm)

### 4. Measurement of tan delta at rest

The measurement was performed with a cone-and-plate rheometer Malvern Kinexus with a cone of 40 mm and an angle of 4° and with an oscillation measurement (Frequency = 1 Hz, Shear 20 Pa).

### 5. Measurement of tan delta after shear at 1000s⁻¹

The measurement was performed with a cone-and-plate rheometer Malvern Kinexus with a cone of 40 mm and an angle of 4° after pre-shearing the sample (to simulate the writing process) for about 30 seconds at about 1000 s⁻¹.

### 6. Seepage 23°C - 24h storage

This test measures the amount of ink that will leak from the point of a ball pen when it is stored pointing downwards for one day at 23°C. The process was as carried out as follows (test on 10 pens):
1. Ball pen start = make pen write to decrease its viscosity.
2. Wipe ink from the point with non fluffy paper
3. Store the Ball pen 24 hours point down at 23°C / 50% RH
4. Transfer ink drop from the pen point to a paper. Rotate the point of each pen on the test sheet 360°, transferring any ink seepage to the test sheet.
5. Cover the seepage display with a strip of transparent tape
6. Spread the ink stain using a ceramic roulette to a circular stain.
7. Measurement of diameter of each stain (record the minimum diameter that incorporates the entire sport)
8. Calculate the average spot size (mm) from all 10 samples.

### 7. Seepage 1 week storage 40°C / 80 % RH

This test measures the amount of ink that will leak from the point of a ball pen when it is stored point down one week at 40°C / 80% RH. The test simulates keeping the pen in pocket of shirt close to human body. The process was as carried out as follows (test on 10 pens):
1. Ball pen start = make pen write to decrease its viscosity.
2. Wipe ink from the point with non fluffy paper
3. Store the Ball pen 7 days point down @ 40°C / 80% RH
4. Transfer ink drop from the pen point to a paper. Rotate the point of each pen on the test sheet 360°, transferring any ink seepage to the test sheet.
5. Cover the seepage display with a strip of transparent tape
6. Spread the ink stain using a ceramic roulette to a circular stain.
7. Measurement of diameter of each stain (record the minimum diameter that incorporates the entire sport)
8. Calculate the average spot size (mm) from all 10 samples.

### 8. Machine writing cleanliness

This test evaluates the machine write quality of pens under given test conditions during the first 20 meters of machine writing.

### Equipment:

1. Air conditioned and humidity controlled room: 23 °C (±2°) 50% RH (±5%)
2. Writing machine operated according to the following guidelines:

### a) General conditions:

70° writing angle (0, +10)
100 mm circle circumference
Total weight pen / holder / additional weight : 140-160 grams ISO 12757 test paper
Writing surface of polished stainless steel with felt underneath

### b) Machine Parameters:

4.5 m/min writing speed (± 0.5)
0.6 mm spacing between circles (± 0.2) on Minitek APC or position 5 on Mikron
1 axial pen rotation per 100 circles
Writing length : 20 meters

### c) Process:

1. Place cartridges in barrels
2. Draw loops to start pens
3. Select the position with spacing 0.6 mm and record 20 meters over the counter
4. Run the test by pressing the "pens rotation"
5. Calculate average score on tested pens excluding pens which have not started.
6. Evaluate the cleanliness i.e. more or less uniform thickness on the line (presence of stains)

### 9. Machine writing regularity

This test evaluates the machine write quality of pens under given test conditions during the first 20 meters of machine writing.

### Equipment:

1. Air conditioned and humidity controlled room: 23 °C (±2°) 50% RH (±5%)
2. Writing machine operated according to the following guidelines:

### a) General conditions:

70° writing angle (0, +10)
100 mm circle circumference
Total weight pen / holder / additional weight : 140-160 grams
ISO 12757 test paper
Writing surface of polished stainless steel with felt underneath

### b) Machine Parameters:

4.5 m/min writing speed (± 0.5)
0.6 mm spacing between circles (± 0.2) on Minitek APC or position 5 on Mikron 1 axial pen rotation per 100 circles
Writing length : 20 meters

### c) Process:

1. Place cartridges in barrels
2. Draw loops to start pens
3. Select the position with spacing 0.6 mm and record 20 meters over the counter
4. Run the test by pressing the "pens rotation"
5. Calculate average score on tested pens excluding pens which have not started.
6. Evaluate the regularity i.e. more or less uniform color when writing (presence of white in lines)

### 10. Complete ink restitution

This test reflects the "mileage" of a pen, i.e. the capacity of the pen to write until it stops writing. Samples are marked "Yes" when the pen wrote until its cartridge was completely empty. Otherwise, the sample was marked as "No".

### 11. Handwriting cleanliness

This test measures the uniformity in thickness of a written line. The regularity of the written line thickness was visually assessed and rated in intervals of 1. The rating scale was as follows:
10: very clean, no excess, no stains,
0: not clean, excess and ink stains on the written lines

### 12. Handwriting regularity

This test measures the uniformity of color when writing. The samples were visually inspected for lighter or darker areas and "channels" in the middle of a line. The rating scale was as follows, with intervals of 1:
10: very regular, no white in the line,
0: not regular

### 13. Gooping

This test assesses whether ink drops from the point after manual writing. It is a visual assessment of the point after writing one sentence.

### Example 1

Following the procedure outlined for the third aspect of the disclosure, the following non-aqueous writing ink was prepared:

| Component | Primary Function | Content in wt. % |
|---|---|---|
| Tego Airex 900 | Defoamer | 0.05% |
| Solvent Red 49 | Dye | 2.5% |
| Solvent Black 46 at 50% in phenoxyethanol | Dye | 30% |
| Lonzest SOC | Additive (clear drain) | 1.3% |
| SK resin | Binder (Newtonian) | 12.5% |
| Aerosil 200 at 10% in 1-phenoxy-2-propanol | Silica (part of gelling system) | 4% |
| PVP K80 | Elastic agent | 0.15% |
| Crayvallac Super at 4% in 1-phenoxy-2-propanol | Fatty acid amide wax (part of gelling system) | 6.5% |
| 1-phenoxy-2-propanol | Solvent | ad 100% |
| Total | | 100 |

The rheological properties of the ink according to Example 1 were as follows:
- Viscosity at rest = 74990cP
- Viscosity under shear = 2765 cP
- Tan delta at rest = 6.9
- Tan delta after shear = 29.7

### Example 2 and Comparative Examples 1 to 9

Further non-aqueous writing inks were prepared as described for Example 1 with the only variable being the composition of the ink as shown below. Dyes, defoamer, and clear drain additives remained unchanged. The prepared inks were injected into the cartridges. All experimental tests have been done on stabilized cartridges, i.e. after conditioning after injection for at least one week of storage at 23 °C and 50% RH. This time point is called T=0. The writing system is a retractable cartridge with a needle tip of 1mm.

Below table 1 shows the compositions used, including the above Example 1 for reference:

| Example | SK resin (wt.-%) | KTR 123 resin (wt.-%) | Crayvallac Super (wt.-%) | PVP K80 (wt.-%) | Aerosil 200 (wt.-%) |
|---|---|---|---|---|---|
| Example 1 | 12.5 | 0 | 0.26 | 0.15 | 0.4 |
| Example 2 | 12.15 | 0 | 0.26 | 0.5 | 0.4 |
| Comparative Example 1 | 12.5 | 0.15 | 0.26 | 0 | 0.4 |
| Comparative Example 2 | 12.5 | 0 | 0.26 | 0.15 | 0 |
| Comparative Example 3 | 12.5 | 0 | 0 | 0.15 | 0.4 |
| Comparative Example 4 | 0 | 0 | 0.36 | 0.15 | 0.4 |
| Comparative Example 5 | 11.65 | 0 | 0.26 | 1 | 0.4 |
| Comparative Example 6 | 7.65 | 0 | 0.26 | 5 | 0.4 |
| Comparative Example 7 | 0 | 0 | 0.36 | 0.7 | 0.4 |
| Comparative Example 8 | 0 | 0 | 0.46 | 0.15 | 0 |
| Comparative Example 9 | 0.7 | 0 | 0.42 | 0 | 0.4 |

The performance of the Examples and the Comparative Examples is indicated in Fig. 1.

As evident from a comparison of Comparative Example 1 and Example 1, replacing 0.15 wt.-% of the SK resin binder with 0.15 wt.-% of a homo or copolymer of vinylpyrrolidone avoids the problem of gooping of the ink while providing a very acceptable balance of other writing performance criteria. Without wishing to be bound by theory, the presence of a homo or copolymer of vinylpyrrolidone is believed to modify the gelling network such that the dynamic viscosity returns rapidly to the viscosity at rest immediately after the writing event and, thus, avoids gooping. As evident from Comparative Examples 5 to 7, replacing the SK resin binder with more than 0.6 wt.-% of a homo or copolymer of vinylpyrrolidone destroys this effect and gooping returns. Further increasing the level of the homo or copolymer of vinylpyrrolidone (Comp. Ex. 5) again changes the gelling network such that gooping is avoided, but then the hand- and machine writing regularity becomes unacceptably low. The table in Fig. 1 further shows that overall performance is best when a resin is used in combination with the homo or copolymer of vinylpyrrolidone, the fatty acid amide wax and the hydrophilic silica.

### Example 3

The following non-aqueous writing ink can be prepared:

| Component | Primary Function | Content in wt. % |
|---|---|---|
| Organo modified polysiloxane (Tego Airex 900) | Defoamer | 0.05% |
| Solvent Red 49 | Dye | 2.5% |
| Solvent Black 46 at 50% in phenoxyethanol | Dye | 30% |
| Sorbitan sesquioleate (Lonzest SOC) | Additive (clear drain) | 1.3% |
| Resin acetophenone formaldehyde modified (SK resin) | Binder (Newtonian) | 12.5% |
| Hydrophilic silica (Aerosil 200 at 10% in 1-phenoxy-2-propanol) | Silica (part of gelling system) | 4% |
| Polyvinybutyral (Butvar by Eastman) | Elastic agent | 0.15% |
| Polyamide wax (Crayvallac Super at 4% in 1-phenoxy-2-propanol) | Fatty acid amide wax (part of gelling system) | 6.5% |
| 1-phenoxy-2-propanol | Solvent | ad 100% |
| Total | | 100 |

## Claims

1. A writing instrument, in particular a pen such as a ball-pen, containing a non-aqueous writing ink which comprises a solvent, a coloring agent, a resin, a gelling agent, and a homo or copolymer of vinylpyrrolidone or a polyvinyl alcohol which is acetalized with an aldehyde comprising between 1 and about 6 carbon atoms,
wherein the gelling agent comprises a mixture of silica particles and of a fatty acid amide wax, and
wherein the homo or copolymer of vinylpyrrolidone, if present, is present in amounts of between 0.05 and 0.6 wt.-%, relative to the total weight of the ink; and
wherein the polyvinyl alcohol which is acetalized with an aldehyde comprising between 1 and about 6 carbon atoms, if present, is present in amounts of between about 0.05 and about 1.0 wt.-%, relative to the total weight of the ink.

2. The writing instrument of claim 1, wherein the homo or copolymer of vinylpyrrolidone is polyvinylpyrrolidone.

3. The writing instrument of claim 2, wherein the polyvinylpyrrolidone has a weight-average molecular weight of above about 200 kDa, specifically between about 400 and about 2300 kDa, more specifically between about 450 and about 2000 kDa, and in particular between about 600 and about 1900 kDa.

4. The writing instrument of any one of claims 1 to 3, wherein the amount by weight of the homo or copolymer of vinylpyrrolidone is lower than the amount by weight of the mixture of silica particles and of a fatty acid amide wax.

5. The writing instrument of any one of claims 1 to 4, wherein the silica particles comprise hydrophilic silica particles, and in particular wherein the hydrophilic silica particles are present in an amount of between about 0.10 and about 0.60 wt.-%, relative to the total weight of the ink.

6. The writing instrument of any one of claims 1 to 5, wherein the fatty acid amide wax comprises an N,N'-ethylene-bis-fatty acid amide, in particular an octadecanamide of the following formula (I)

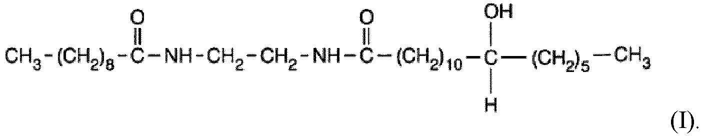

7. The writing instrument of any one of claims 1 to 6, wherein the gelling agent is present in amounts of between about 0.1 and about 1.2 wt.-%, more specifically between about 0.15 and about 0.60 wt.-%, relative to the total weight of the ink.

8. The writing instrument of any one of claims 1 to 7, wherein the solvent is selected from the group consisting of glycol ethers, alcohols, and mixture thereof; more specifically wherein the solvent is a polyethylene glycol ether, a polypropylene glycol ether, phenoxyethanol, 1-phenoxy-2-propanol, or mixtures thereof and/or wherein the solvent is present in amounts of between about 35 and about 80 wt.-%, more specifically between about 45 and about 75 wt.-%, relative to the total weight of the ink; or wherein the ink comprises between about 55 and about 75 wt.-% of 1-phenoxy-2-propanol.

9. The writing instrument of any one of claims 1 to 8, wherein the coloring agent is a dye, in particular a dye selected from the group consisting of azoic dyes, triarylmethane dyes, phthalocyanine derivatives dyes, xanthene dyes and mixture thereof, and/or wherein the coloring agent is present in amounts of between about 5 and about 30 wt.-%, in particular between about 7 and about 28 wt.-%, relative to the total weight of the ink.

10. The writing instrument of any one of claims 1 to 9, wherein the non-aqueous writing ink further comprises one or more additives, in particular one or more additives selected from the group consisting of thickening agents, clear drain agents, viscosity imparting agents, lubricants, dispersing agents and mixture thereof.

11. The writing instrument of any one of claims 1 to 10, wherein the non-aqueous writing ink which comprises in amounts relative to the total weight of the ink:
between about 0.1 and about 0.6 wt.-% polyvinylpyrrolidone having a weight-average molecular weight of between about 450 and about 2000 kDa;
between about 0.15 and about 0.60 wt.-% of the fatty acid amide wax; and
between about 0.15 and about 0.60 wt.-% hydrophilic silica.

12. The writing instrument of any one of claims 1 to 11, wherein the non-aqueous writing ink comprises a resin selected from polyester resins, polyurethane resins, ketone resins, ether resins, and mixtures thereof; and wherein the resin is optionally present in an amount of between about 3 and about 30%, specifically between about 3 and about 25%, and in particular between about 5 to about 20%, relative to the total weight of the ink.

13. The writing instrument of any one of claims 1 to 12, wherein the ink has a loss factor tan δ at rest of between about 3 and about 15, more specifically between about 4 and about 12, and in particular between about 5 and about 10, in particular a loss factor after shear of between about 8 and about 60, more specifically between about 11 and about 50 , and in particular between about 15 and about 40.

14. A non-aqueous writing ink comprising a solvent, a coloring agent, a resin, a gelling agent, and a homo or copolymer of vinylpyrrolidone, wherein the gelling agent is a mixture of silica particles and of a fatty acid amide wax, and wherein the homo or copolymer of vinylpyrrolidone is present in amounts of between about 0.05 and about 0.6 wt.-%, relative to the total weight of the ink.

15. A process of preparing the writing instrument of any one of claims 1 to 13 or the non-aqueous writing ink according to claim 14, wherein a non-aqueous writing ink comprising a solvent, a coloring agent, a resin, a gelling agent, and a homo or copolymer of vinylpyrrolidone, wherein the gelling agent comprises a mixture of silica particles and of a fatty acid amide wax, and wherein the homo or copolymer of vinylpyrrolidone is present in amounts of between 0.05 and 0.6 wt.-%, relative to the total weight of the ink; is prepared by:
a) forming a first premix comprising silica particles in a solvent at a temperature of between about 30 and about 70°C with a shear rate of between about 20 and about 25 m/s;
b) combining the first premix with the remainder of the components of the non-aqueous writing ink.

## Patentansprüche

1. Schreibgerät, insbesondere ein Stift, wie ein Kugelschreiber, das eine nichtwässrige Schreibtinte enthält, die ein Lösungsmittel, ein Färbemittel, ein Harz, ein Geliermittel und ein Homo- oder Copolymer von Vinylpyrrolidon oder einen Polyvinylalkohol umfasst, der mit einem Aldehyd acetalisiert ist, umfassend zwischen 1 und etwa 6 Kohlenstoffatome,
wobei das Geliermittel eine Mischung aus Siliciumdioxidteilchen und einem Fettsäureamidwachs umfasst, und
wobei das Homo- oder Copolymer von Vinylpyrrolidon, falls vorhanden, in Mengen von zwischen 0,05 und 0,6 Gew.-%, bezogen auf das Gesamtgewicht der Tinte, vorhanden ist; und
wobei der Polyvinylalkohol, der mit einem Aldehyd acetalisiert ist, umfassend zwischen 1 und etwa 6 Kohlenstoffatome, falls vorhanden, in Mengen von zwischen etwa 0,05 und etwa 1,0 Gew.-%, bezogen auf das Gesamtgewicht der Tinte, vorhanden ist.

2. Schreibgerät nach Anspruch 1, wobei das Homo- oder Copolymer von Vinylpyrrolidon Polyvinylpyrrolidon ist.

3. Schreibgerät nach Anspruch 2, wobei das Polyvinylpyrrolidon ein Massenmittel von über etwa 200 kDa, speziell zwischen etwa 400 und etwa 2300 kDa, noch spezieller zwischen etwa 450 und etwa 2000 kDa und insbesondere zwischen etwa 600 und etwa 1900 kDa, aufweist.

4. Schreibgerät nach einem der Ansprüche 1 bis 3, wobei die Gewichtsmenge des Homo- oder Copolymers von Vinylpyrrolidon niedriger als die Gewichtsmenge der Mischung aus Siliciumdioxidteilchen und einem Fettsäureamidwachs ist.

5. Schreibgerät nach einem der Ansprüche 1 bis 4, wobei die Siliciumdioxidteilchen hydrophile Siliciumdioxidteilchen umfassen, und insbesondere wobei die hydrophilen Siliciumdioxidteilchen in einer Menge von zwischen etwa 0,10 und etwa 0,60 Gew.-%, bezogen auf das Gesamtgewicht der Tinte, vorhanden sind.

6. Schreibgerät nach einem der Ansprüche 1 bis 5, wobei das Fettsäureamidwachs ein N,N'-Ethylenbisfettsäureamid, insbesondere ein Octadecanamid der folgenden Formel (I), umfasst

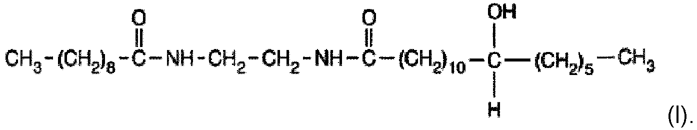

7. Schreibgerät nach einem der Ansprüche 1 bis 6, wobei das Geliermittel in Mengen von zwischen etwa 0,1 und etwa 1,2 Gew.-%, noch spezieller zwischen etwa 0,15 und etwa 0,60 Gew.-%, bezogen auf das Gesamtgewicht der Tinte, vorhanden ist.

8. Schreibgerät nach einem der Ansprüche 1 bis 7, wobei das Lösungsmittel aus der Gruppe ausgewählt ist, bestehend aus Glycolethern, Alkoholen und der Mischung davon; noch spezieller wobei das Lösungsmittel ein Polyethylenglycolether, ein Polypropylenglycolether, Phenoxyethanol, 1-Phenoxy-2-propanol oder Mischungen davon ist und/oder wobei das Lösungsmittel in Mengen von zwischen etwa 35 und etwa 80 Gew.-%, noch spezieller zwischen etwa 45 und etwa 75 Gew.-%, bezogen auf das Gesamtgewicht der Tinte, vorhanden ist; oder wobei die Tinte zu zwischen etwa 55 und etwa 75 Gew.-% 1-Phenoxy-2-propanol umfasst.

9. Schreibgerät nach einem der Ansprüche 1 bis 8, wobei das Färbemittel ein Farbstoff ist, insbesondere ein Farbstoff, der aus der Gruppe ausgewählt ist, bestehend aus Azofarbstoffen, Triarylmethanfarbstoffen, Phthalocyaninderivatfarbstoffen, Xanthenfarbstoffen und Mischungen davon, und/oder wobei das Färbemittel in Mengen zwischen etwa 5 und etwa 30 Gew.-%, insbesondere zwischen etwa 7 und etwa 28 Gew.-%, bezogen auf das Gesamtgewicht der Tinte, vorhanden ist.

10. Schreibgerät nach einem der Ansprüche 1 bis 9, wobei die nichtwässrige Schreibtinte ferner ein oder mehrere Additive umfasst, insbesondere ein oder mehrere Additive, die aus der Gruppe ausgewählt sind, bestehend aus Verdickungsmitteln, Klarablaufmitteln, viskositätsverleihenden Mitteln, Schmiermitteln, Dispergiermitteln und der Mischung davon.

11. Schreibgerät nach einem der Ansprüche 1 bis 10, wobei die nichtwässrige Schreibtinte, die in Mengen, bezogen auf das Gesamtgewicht der Tinte, umfasst: zu zwischen etwa 0,1 und etwa 0,6 Gew.-% Polyvinylpyrrolidon, das ein Massenmittel zwischen etwa 450 und etwa 2000 kDa aufweist; zu zwischen etwa 0,15 und etwa 0,60 Gew.-% das Fettsäureamidwachs; und zu zwischen etwa 0,15 und etwa 0,60 Gew.-% hydrophiles Siliciumdioxid.

12. Schreibgerät nach einem der Ansprüche 1 bis 11, wobei die nichtwässrige Schreibtinte ein Harz umfasst, das aus Polyesterharzen, Polyurethanharzen, Ketonharzen, Etherharzen und Mischungen davon ausgewählt ist; und wobei das Harz optional in einer Menge von zwischen etwa 3 und etwa 30 %, speziell zwischen etwa 3 und etwa 25 % und insbesondere zwischen etwa 5 bis etwa 20 %, bezogen auf das Gesamtgewicht der Tinte, vorhanden ist.

13. Schreibgerät nach einem der Ansprüche 1 bis 12, wobei die Tinte einen Verlustfaktor tan δ in Ruhe von zwischen etwa 3 und etwa 15, noch spezieller zwischen etwa 4 und etwa 12 und insbesondere zwischen etwa 5 und etwa 10, insbesondere einen Verlustfaktor nach einem Scheren von zwischen etwa 8 und etwa 60, noch spezieller zwischen etwa 11 und etwa 50, und insbesondere zwischen etwa 15 und etwa 40, aufweist.

14. Nichtwässrige Schreibtinte, umfassend ein Lösungsmittel, ein Färbemittel, ein Harz, ein Geliermittel und ein Homo- oder Copolymer von Vinylpyrrolidon, wobei das Geliermittel eine Mischung aus Siliciumdioxidteilchen und einem Fettsäureamidwachs ist, und wobei das Homo- oder Copolymer in Mengen von zwischen etwa 0,05 und etwa 0,6 Gew.-%, bezogen auf das Gesamtgewicht der Tinte, vorhanden ist.

15. Verfahren zum Herstellen des Schreibgeräts nach einem der Ansprüche 1 bis 13 oder der nichtwässrigen Schreibtinte nach Anspruch 14, wobei eine nichtwässrige Schreibtinte, umfassend ein Lösungsmittel, ein Färbemittel, ein Harz, ein Geliermittel und ein Homo- oder Copolymer von Vinylpyrrolidon, wobei das Geliermittel eine Mischung aus Siliciumdioxidteilchen und einem Fettsäureamidwachs umfasst, und wobei das Homo- oder Copolymer von Vinylpyrrolidon in Mengen von zwischen etwa 0,05 und 0,6 Gew.-%, bezogen auf das Gesamtgewicht der Tinte, vorhanden ist; hergestellt wird durch:
a) Ausbilden einer ersten Vormischung, umfassend Siliciumdioxidteilchen, in einem Lösungsmittel bei einer Temperatur von zwischen etwa 30 und etwa 70 °C mit einer Schergeschwindigkeit von zwischen etwa 20 und etwa 25 m/s;
b) Kombinieren der ersten Vormischung mit dem Rest der Komponenten der nichtwässrigen Schreibtinte.

## Revendications

1. Instrument d'écriture, en particulier un stylo tel qu'un stylo à bille, contenant une encre d'écriture non aqueuse qui comprend un solvant, un agent colorant, une résine, un agent gélifiant et un homopolymère ou copolymère de vinylpyrrolidone ou un alcool polyvinylique qui est acétalisé avec un aldéhyde comprenant entre 1 et environ 6 atomes de carbone,
dans lequel l'agent gélifiant comprend un mélange de particules de silice et d'une cire d'amide d'acide gras, et
dans lequel l'homopolymère ou copolymère de vinylpyrrolidone, s'il est présent, est présent en des quantités comprises entre 0,05 et 0,6 % en poids, par rapport au poids total de l'encre ; et
dans lequel l'alcool polyvinylique qui est acétalisé avec un aldéhyde comprenant entre 1 et environ 6 atomes de carbone, s'il est présent, est présent en des quantités comprises entre environ 0,05 et environ 1,0 % en poids, par rapport au poids total de l'encre.

2. Instrument d'écriture selon la revendication 1, dans lequel l'homopolymère ou copolymère de vinylpyrrolidone est la polyvinylpyrrolidone.

3. Instrument d'écriture selon la revendication 2, dans lequel la polyvinylpyrrolidone a une masse moléculaire moyenne en poids supérieure à environ 200 kDa, spécifiquement entre environ 400 et environ 2300 kDa, plus spécifiquement entre environ 450 et environ 2000 kDa, et en particulier entre environ 600 et environ 1900 kDa.

4. Instrument d'écriture selon l'une quelconque des revendications 1 à 3, dans lequel la quantité en poids de l'homopolymère ou copolymère de vinylpyrrolidone est inférieure à la quantité en poids du mélange de particules de silice et d'une cire d'amide d'acide gras.

5. Instrument d'écriture selon l'une quelconque des revendications 1 à 4, dans lequel les particules de silice comprennent des particules de silice hydrophile, et en particulier dans lequel les particules de silice hydrophile sont présentes en une quantité comprise entre environ 0,10 et environ 0,60 % en poids, par rapport au poids total de l'encre.

6. Instrument d'écriture selon l'une quelconque des revendications 1 à 5, dans lequel la cire d'amide d'acide gras comprend un amide de N,N'-éthylène-bis-acide gras, en particulier un octadécanamide de la formule (I) suivante

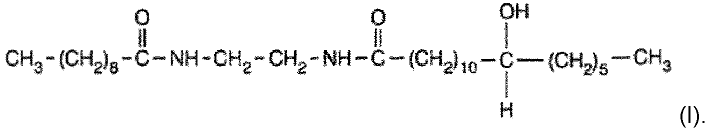

7. Instrument d'écriture selon l'une quelconque des revendications 1 à 6, dans lequel l'agent gélifiant est présent en des quantités comprises entre environ 0,1 et environ 1,2 % en poids, plus spécifiquement entre environ 0,15 et environ 0,60 % en poids, par rapport au poids total de l'encre.

8. Instrument d'écriture selon l'une quelconque des revendications 1 à 7, dans lequel le solvant est choisi dans le groupe constitué d'éthers de glycol, alcools, et mélange de ceux-ci ; plus spécifiquement dans lequel le solvant est un éther de polyéthylène glycol, un éther de polypropylène glycol, du phénoxyéthanol, du 1-phénoxy-2-propanol, ou des mélanges de ceux-ci et/ou dans lequel le solvant est présent en des quantités comprises entre environ 35 et environ 80 % en poids, plus spécifiquement entre environ 45 et environ 75 % en poids, par rapport au poids total de l'encre ; ou dans lequel l'encre comprend entre environ 55 et environ 75 % en poids de 1-phénoxy-2-propanol.

9. Instrument d'écriture selon l'une quelconque des revendications 1 à 8, dans lequel l'agent colorant est un colorant, en particulier un colorant choisi dans le groupe constitué par colorants azoïques, colorants triarylméthane, colorants dérivés de phtalocyanine, colorants xanthène et mélanges de ceux-ci, et/ou dans lequel l'agent colorant est présent en des quantités comprises entre environ 5 et environ 30 % en poids, en particulier entre environ 7 et environ 28 % en poids, par rapport au poids total de l'encre.

10. Instrument d'écriture selon l'une quelconque des revendications 1 à 9, dans lequel l'encre d'écriture non aqueuse comprend en outre un ou plusieurs additifs, en particulier un ou plusieurs additifs choisis dans le groupe constitué par agents épaississants, agents de drainage transparents, agents conférant de la viscosité, lubrifiants, agents dispersants et mélange de ceux-ci.

11. Instrument d'écriture selon l'une quelconque des revendications 1 à 10, dans lequel l'encre d'écriture non aqueuse comprend dans des quantités par rapport au poids total de l'encre : entre environ 0,1 et environ 0,6 % en poids de polyvinylpyrrolidone ayant une masse moléculaire moyenne en poids comprise entre environ 450 et environ 2000 kDa ; entre environ 0,15 et environ 0,60 % en poids de la cire d'amide d'acide gras ; et entre environ 0,15 et environ 0,60 % en poids de silice hydrophile.

12. Instrument d'écriture selon l'une quelconque des revendications 1 à 11, dans lequel l'encre d'écriture non aqueuse comprend une résine choisie parmi résines de polyester, résines de polyuréthane, résines de cétone, résines d'éther, et mélanges de celles-ci ; et/ou dans lequel la résine est facultativement présente en une quantité comprise entre environ 3 et environ 30 %, spécifiquement entre environ 3 et environ 25 %, et en particulier entre environ 5 et environ 20 %, par rapport au poids total de l'encre.

13. Instrument d'écriture selon l'une quelconque des revendications 1 à 12, dans lequel l'encre a un facteur de perte tan δ au repos compris entre environ 3 et environ 15, plus spécifiquement entre environ 4 et environ 12, et en particulier entre environ 5 et environ 10, en particulier un facteur de perte après cisaillement compris entre environ 8 et environ 60, plus spécifiquement entre environ 11 et environ 50, et en particulier entre environ 15 et environ 40.

14. Encre d'écriture non aqueuse comprenant un solvant, un agent colorant, une résine, un agent gélifiant, et un homopolymère ou copolymère de vinylpyrrolidone, dans laquelle l'agent gélifiant est un mélange de particules de silice et d'une cire d'amide d'acide gras, et dans laquelle l'homopolymère ou copolymère de vinylpyrrolidone est présent en des quantités comprises entre environ 0,05 et environ 0,6 % en poids, par rapport au poids total de l'encre.

15. Procédé de préparation de l'instrument d'écriture selon l'une quelconque des revendications 1 à 13 ou l'encre d'écriture non aqueuse selon la revendication 14, dans lequel une encre d'écriture non aqueuse comprenant un solvant, un agent colorant, une résine, un agent gélifiant, et un homopolymère ou copolymère de vinylpyrrolidone, dans lequel l'agent gélifiant comprend un mélange de particules de silice et d'une cire d'amide d'acide gras, et dans lequel l'homopolymère ou copolymère de vinylpyrrolidone est présent en des quantités comprises entre 0,05 et 0,6 % en poids, par rapport au poids total de l'encre ; est préparée par :
a) la formation d'un premier prémélange comprenant des particules de silice dans un solvant à une température comprise entre environ 30 et environ 70 °C avec un taux de cisaillement compris entre environ 20 et environ 25 m/s ;
b) la combinaison du premier prémélange avec le reste des composants de l'encre d'écriture non aqueuse.
